# FASCICULE DE BREVET EUROPEEN

(11) **EP 2 775 064 B1**
(45) Date de publication et mention de la délivrance du brevet: **20.12.2017**
(21) Numéro de dépôt: 14158390.6
(22) Date de dépôt: 07.03.2014
(51) Int. Cl.: E04D 13/17, F24F 7/02, E04B 7/20, E04D 3/35, E04D 3/361

(54) **Dispositif de ventilation et charpente de toit comprenant un tel dispositif**
Belüftungsvorrichtung und Balkenwerk eines Dachs, das diese Vorrichtung umfasst
Ventilation device and roof structure including such a device

(30) Priorité: 08.03.2013 FR 1352090
(43) Date de publication de la demande: 10.09.2014
(73) Titulaire: Barsun, 85000 La Roche sur Yon (FR)
(72) Inventeur: THOUIN, Stéphane, 87280 LIMOGES (FR); DE RANCOURT, Hubert, 95590 PRESLES (FR)
(74) Mandataire: Casalonga

(56) Documents cités:
- EP-A1- 0 789 404
- FR-A1- 2 553 449
- FR-A1- 2 772 808
- FR-A1- 2 974 375
- US-A- 4 150 785
- US-A- 4 258 703
- US-A- 4 790 112
- US-A- 4 967 729

## Description

La présente invention concerne le domaine des éléments de couverture de bâtiments. Plus particulièrement, la présente invention concerne un dispositif de ventilation de bâtiments intégré dans des éléments de couverture. L'invention se rapporte à des éléments de couverture permettant notamment d'intégrer un équipement photovoltaïque.

Différents types d'éléments de couverture sont utilisés à ce jour. On connaît le bardage métallique en tôle d'acier nervurée et laquée dont le coût est compétitif mais qui n'assure aucune isolation thermique ce qui occasionne des fluctuations importantes de la température intérieure du bâtiment et se traduit par une déperdition d'énergie importante en hiver et une chaleur intérieure excessive en été. Une condensation importante peut se produire sur la face interne des tôles ce qui peut être nuisible aux personnes, aux animaux et aux matériels susceptibles de se trouver dans le bâtiment. Enfin, des bâtiments ainsi recouverts nécessitent une protection spécifique contre l'électricité, la tôle métallique étant un élément conducteur.

On a également proposé des tôles perforées permettant d'éviter la condensation. Toutefois, ces tôles dont les bords de perforation ne sont pas recouverts de laque posent des problèmes de corrosion et tendent à laisser passer la pluie. De plus, les perforations se colmatent rapidement en présence de poussière.

On utilise également des couvertures en bois, généralement en planches de 0,15 à 0,20m de large, qui assurent une isolation thermique satisfaisante en toutes saisons. L'isolation électrique est également satisfaisante et la capacité d'absorption de l'humidité est relativement importante. Toutefois, ces planches de bois ne sont durables que si elles sont traitées, par exemple à la créosote ou avec des sels de métaux lourds, ces deux produits étant considérés comme polluants et risquant de faire l'objet d'une interdiction d'utilisation. Par ailleurs, le temps de pose des planches est relativement long en raison de leur faible largeur et de leur longueur limitée. En particulier, le dispositif requiert une technique de pose très précise afin de garantir l'étanchéité dans la durée, notamment en raison de la déformation du bois dans le temps.

Il existe également différents dispositifs pour supporter et fixer un équipement photovoltaïque, ou panneau solaire, sur une toiture. Cependant, la plupart de ces dispositifs viennent se superposer aux éléments de la toiture, et ne remplacent donc pas ceux-ci, c'est-à-dire ne sont pas intégrés à la toiture. On entend ici par « intégration » le fait que l'équipement photovoltaïque et son support permette à la fois de produire de l'électricité et d'assurer une fonction technique ou architecturale de couverture. Il peut ainsi s'agir, dans le cas d'un équipement photovoltaïque installé sur la toiture d'un bâtiment, de remplacer des ardoises, tuiles ou encore une partie de la couverture de la toiture. L'équipement photovoltaïque doit pour ce faire, remplir la fonction de la couverture, à savoir protéger de façon étanche et durable la structure du bâtiment contre les intempéries, résister aux agressions atmosphériques et au poids du personnel d'entretien.

Les dispositifs actuels d'intégration d'équipement photovoltaïque comprennent généralement un rail de fixation et une sous-couche plastique ou en tôle. Les sous-couches en plastique sont peu performantes pour assurer une fonction de couverture de toit. Avec les sous-couches en tôle, on observe une condensation et une augmentation importante de la température entre la sous-couche et l'équipement photovoltaïque, ce qui diminue le rendement de ce dernier.

Il est également connu d'équiper les bâtiments avec une ventilation. Une telle ventilation peut être produite par une dépression à l'intérieur du bâtiment provoquant une entrée d'air extérieur au niveau des aérations de porte, de fenêtre ou encore au niveau d'ouvertures d'aérations spécifiques prévues à cet effet. Cependant, la quantité d'air introduite dans le bâtiment ainsi que la température de cet air ne sont pas contrôlées, de sorte que la ventilation peut nécessiter un apport de chauffage supplémentaire, notamment durant les saisons fraiches.

Un dispositif de ventilation pour un bâtiment selon le préambule de la revendication 1 est par ailleurs connu de EP 0789404 A1.

La présente invention a pour objet de résoudre les problèmes techniques énoncés précédemment. En particulier l'invention a pour but de proposer un dispositif selon la revendication 1. Les ouvertures latérales, ou ouvertures d'extrémités, se trouvent à deux extrémités opposées du panneau creux. Le collecteur d'air peut être un système collecteur comprenant plusieurs circuits collecteurs, chaque circuit collecteur étant connecté à un panneau creux ou à un groupe de panneaux creux distinct. Avantageusement, le panneau creux est un panneau monobloc configuré pour permettre de canaliser au moins une première lame d'air circulant longitudinalement entre les deux ouvertures d'extrémité, la première lame d'air étant canalisée dans un volume libre situé entre une paroi supérieure et une paroi inférieure du panneau creux, et pour permettre en outre de canaliser une seconde lame d'air entre la paroi supérieure du panneau creux, entre des zones support du panneau creux formant des reliefs longitudinaux par rapport à la paroi supérieure, et entre un élément de couverture sensiblement plan reposant directement sur les zones support.

De préférence, les deux ouvertures d'extrémité se font face selon la ligne de plus grande pente du toit.

Ainsi, grâce à l'invention, il est possible à la fois de limiter les fuites thermiques du bâtiment, mais également de récupérer des calories inutilisées lors de la ventilation du bâtiment. En particulier, la lame d'air du panneau creux permet de conférer à ce dernier des propriétés d'isolation thermique, tandis que l'air issu du panneau creux permet de ventiler l'intérieur du bâtiment avec une température adaptée aux besoins.

Préférentiellement, le panneau creux comprend une surface supérieure et une surface inférieure, sensiblement parallèles, distantes l'une de l'autre, définissant l'épaisseur de la lame d'air, et séparées par des entretoises montées dans un sens longitudinal du panneau, les entretoises étant destinées à être montées selon la ligne de plus grande pente du toit, et les deux ouvertures étant opposées dans le sens longitudinal du panneau.

Selon un mode de réalisation, les surfaces supérieure et inférieure du panneau creux sont des parois pleines. L'air circulant dans le panneau creux est donc guidé par les entretoises, d'une ouverture du panneau creux à l'autre ouverture opposée dans le sens longitudinal.

Alternativement, la surface supérieure du panneau creux peut comprendre des ouvertures permettant à l'air situé entre la surface supérieure et un matériau de couverture (tuiles, panneau solaire, ...) de circuler dans la lame d'air du panneau creux. Les ouvertures peuvent être de largeur transversale comprise entre 0,1 et 1 fois, et de préférence entre 0,2 et 1 fois la largeur de la lame d'air circulant dans le panneau sous l'ouverture. Afin de permettre le captage de la lame d'air circulant au dessus du panneau creux, on peut prévoir une multitude d'ouvertures de petits diamètres, dont l'espacement, au moins pour un groupe d'ouvertures, est sensiblement du même ordre de grandeur que le diamètre des ouvertures, ou est inférieur au diamètre des ouvertures. On obtient ainsi une grille d'aspiration de l'air circulant au dessus du panneau creux . Selon une autre variante de réalisation, on peut ménager sur le panneau des ouvertures dont les dimensions sont comparable à une largeur transversale d'une lame d'air circulant dans le panneau, par exemple au moins une ouverture de largeur transversale comprise entre 0,5 et 1 fois la largeur de la lame d'air circulant dans le panneau sous l'ouverture.

La structure du panneau permet donc de favoriser la circulation de l'air à l'intérieur de celui-ci, et plus particulièrement de favoriser la collecte de l'air chaud en partie haute du panneau.

Préférentiellement, la surface supérieure du panneau creux comprend un matériau conducteur thermique. La surface supérieure permet notamment de conduire thermiquement les calories apportées par le soleil vers la lame d'air du panneau. De plus, dans le cas où un panneau photovoltaïque est monté sur le panneau creux, la surface supérieure du panneau creux joue alors le rôle de dissipateur thermique pour le panneau photovoltaïque, ce qui permet d'augmenter le rendement du panneau photovoltaïque en limitant sa température de fonctionnement.

Préférentiellement, la surface inférieure du panneau creux comprend un matériau isolant. La surface inférieure permet d'une part d'isoler l'intérieur du bâtiment en limitant les échanges thermiques entre l'intérieur du bâtiment et l'extérieur, et d'autre part de confiner les calories issues de l'exposition au soleil du panneau, à la lame d'air. On peut par exemple réaliser le panneau creux par une technologie d'extrusion bimatière, le matériau de la partie supérieure ayant une conductivité thermique supérieure à la conductivité thermique du matériau de la partie inférieure, par exemple une conductivité thermique au moins 10% supérieure à la conductivité thermique du matériau de la partie inférieure. De telles variantes de propriété sont possibles en utilisant des formulations différents de matières thermoplastiques et en y introduisant des charges de natures différentes, ou en quantités différents. Des matières à base PVC (Polychlorure de Vinyle) sont par exemple connues pour permettre ce type de variations.

Selon un mode de réalisation, le collecteur d'air est destiné à être monté à proximité du faîte du toit et est en communication avec la lame d'air du panneau creux par une des deux ouvertures.

Préférentiellement, le toit comprend une ou plusieurs pannes faitières et le panneau creux est destiné à être monté sur au moins une panne faitière du toit, le collecteur d'air entourant au moins partiellement ladite au moins une panne faitière. Ainsi, la forme du collecteur est choisie de manière à faciliter d'une part l'installation du collecteur, en permettant de le monter autour de la ou des pannes faitières, et d'autre part d'exploiter l'espace présent au faîte du toit qui est généralement perdu.

Lorsque le toit comprend deux pannes faitières, le collecteur d'air peut entourer complètement une panne faitière. Lorsque le toit comprend une seule panne faitière, le collecteur d'air peut être monté en partie sur celle-ci. Dans ce cas, la panne faitière forme une partie du collecteur d'air et le collecteur d'air n'entoure que partiellement la panne faitière.

Selon un autre mode de réalisation, le dispositif de ventilation comprend deux panneaux creux destinés à être montés sur deux pentes différentes du toit, et un moyen de liaison permettant de relier les lames d'air de deux panneaux creux ensemble. Au moins un panneau creux comprend une surface supérieure et une surface inférieure, sensiblement parallèles, définissant l'épaisseur de la lame d'air, et le collecteur d'air est monté sur la surface inférieure du panneau creux. L'air de la lame d'air est alors prélevé au travers d'une ouverture dans la surface inférieure du panneau creux.

Selon ce deuxième mode de réalisation, le faîte du toit n'est pas utilisé, mais uniquement la pente du toit, afin de faciliter l'installation du dispositif de ventilation, notamment dans une habitation dans laquelle le toit est déjà aménagé. Il est alors possible de limiter les travaux sur la partie intérieure du toit, tout en obtenant les avantages liés au dispositif de ventilation.

Préférentiellement, le dispositif de ventilation comprend également un moyen de fermeture monté sur l'ouverture d'extrémité mettant en communication la lame d'air du panneau sur lequel est monté le collecteur d'air avec l'air extérieur.

Selon un autre aspect, l'invention concerne également une charpente de toit comprenant un dispositif de ventilation tel que décrit précédemment.

Préférentiellement, la charpente comprend également au moins deux pannes, par exemple une panne faitière et une panne sablière sur lesquelles est monté le panneau creux. Le panneau creux remplace alors les chevrons de la charpente, et présente idéalement une épaisseur sensiblement égale à celle des chevrons, afin de permettre d'intégrer le dispositif de ventilation à la toiture sans modifier l'épaisseur de cette dernière.

Préférentiellement, la charpente comprend deux pentes (ou versants ou rampants), et comprend un dispositif de ventilation selon le premier mode de réalisation décrit précédemment avec au moins un panneau creux sur chaque pente. Le système collecteur peut comprendre alors deux circuits distincts, chaque panneau creux étant en communication avec un des deux circuits, et chaque circuit comprend alors un moyen d'ouverture commandé, de préférence par un thermostat. Dans ce cas, on distingue les panneaux exposés au soleil et à l'ombre : la lame d'air des panneaux exposés au soleil peut ainsi être utilisée pour apporter des calories au bâtiment ventilé, tandis que la lame d'air des panneaux à l'ombre peut être utilisée pour ventiler le bâtiment avec de l'air plus frais, en été par exemple, lorsque le bâtiment est climatisé. L'association de deux circuits distincts permet ainsi de commander la proportion respective d'air chauffé et d'air frais introduit dans le bâtiment en fonction des besoins. Chaque circuit peut entourer au moins partiellement la ou les pannes faitières du toit. De manière plus générale, chaque circuit peut comprendre un moyen séparé -c'est-à-dire dédié à ce circuit- de régulation de la circulation d'air entre le panneau creux et l'intérieur du bâtiment. Le moyen de régulation peut avantageusement comprendre un thermostat.

Selon un mode de réalisation, la charpente comprend des liteaux fixés sur le panneau creux, et des tuiles disposées sur les liteaux. Le panneau creux remplace alors les chevrons de la charpente.

Selon un autre mode de réalisation, la charpente comprend une couverture et/ou des panneaux solaires, par exemple photovoltaïques ou chauffants, fixés sur le panneau creux. Dans ce cas, le panneau creux permet la fixation des panneaux solaires, ainsi que l'évacuation des calories dégagées par ceux-ci, afin de conserver une température de fonctionnement des panneaux solaires optimale.

Préférentiellement, le panneau creux est de forme rectangulaire, comportant au moins une portion centrale et deux portions d'extrémité s'étendant sur toute la longueur dudit panneau creux, entourant la portion centrale et pourvues de moyens d'accrochage.

Préférentiellement, le moyen d'accrochage est apte à s'accrocher à un panneau creux identique adjacent.

Préférentiellement, le moyen d'accrochage comprend une surface frontale longitudinale et une protubérance longitudinale s'étendant, à partir d'un des bords longitudinaux de la surface frontale, tout d'abord à l'opposé de la portion centrale, puis parallèlement à la surface frontale en direction de l'autre bord longitudinal de la surface frontale, pour définir une rainure longitudinale apte à recevoir la protubérance d'un panneau creux identique adjacent, et formant dans un sens une gouttière. Deux panneaux creux identiques peuvent ainsi être emboîtés l'un dans l'autre de façon étanche. L'eau s'écoulant le long de l'extrémité frontale de la protubérance dirigée vers le bas d'un premier panneau creux tombe dans la gouttière formée par la protubérance dirigée vers le haut du panneau creux associé et s'écoule dans cette gouttière sans entrer dans le bâtiment.

La rainure longitudinale peut être pourvue de bossages de retenue d'un panneau creux identique adjacent, ce qui contribue à la tenue mécanique de l'ensemble des panneaux creux associés entre eux et facilite le montage de ces panneaux creux.

La paroi verticale définissant une gouttière avec la protubérance peut également comprendre un ergot formant butée dans le sens d'un mouvement montant. Dans un mode de réalisation, le dispositif de ventilation selon l'invention comprend un panneau dans la paroi supérieure duquel peuvent être ménagés des orifices configurés pour permettre d'aspirer par une des ouvertures d'extrémité, une partie au moins de l'air circulant dans la lame d'air au dessus du panneau creux.

Les orifices peuvent être obtenus en découpant dans la paroi supérieure, le contour d'un volet d'ouverture qui est ensuite soulevé autour d'une zone charnière non découpée de la paroi supérieure. Selon d'autres variantes de réalisation, les orifices peuvent être des orifices sans volets, obtenus par exemple en découpant des courbes fermées dans la paroi supérieure.

Le panneau creux peut être bordé par une première et une seconde zones d'assemblage, s'étendant longitudinalement le long du panneau creux, et formant respectivement une première et une seconde poutre creuse distinctes et de contours fermés, le contour de la première poutre creuse comprenant une surface plane supérieure d'appui sensiblement horizontale, le contour de la seconde poutre creuse comprenant une surface plane inférieure d'appui sensiblement horizontale, les deux contours fermés étant configuré pour que deux panneaux voisins puissent être assemblés en posant verticalement la surface inférieure d'appui d'un panneau sur la surface supérieure d'appui de l'autre panneau.

Avantageusement, la première et la seconde zone d'assemblage comprennent respectivement un rebord languette montant et un rebord languette descendant reliés respectivement à la première et à la seconde poutre creuse, configurés chacun pour s'insérer verticalement entre le rebord languette et la poutre creuse d'une zone d'assemblage d'un panneau identique voisin lorsque l'on en pose verticalement la surface inférieure d'appui d'un panneau sur la surface supérieure d'appui de l'autre panneau. De manière préférentielle, les rebords languette ont une hauteur inférieure à l'épaisseur de la lame d'air canalisée à l'intérieur du panneau creux, de manière à faciliter l'assemblage des panneaux et à limiter les risques de fissurations accidentelles de la base du rebord languette par un accrochage de l'extrémité libre du rebord languette, dont le bras de levier est ainsi limité. Avantageusement, la position de la base du rebord languette montant et la forme de la première poutre creuse sont configurés pour définir une gouttière de hauteur supérieure ou égale à la hauteur du rebord languette montant. Avantageusement, les rebords supérieurs de cette gouttière se trouvent sensiblement à la même hauteur par rapport à la paroi supérieure du panneau creux, que les faces supérieures des zones support. La hauteur de la gouttière peut être par exemple comprise entre 0,5 et 1 fois la hauteur des zones support, et de manière préférentielle comprise entre 0,7 et 1 fois la hauteur de la zone support.

De manière préférentielle, une des zones d'assemblage forme simultanément une zone support. De manière préférentielle, l'autre zone d'assemblage est dimensionnée pour culminer à une hauteur maximale inférieure à la zone support bordant un second panneau identique une fois les surfaces planes inférieure et supérieure d'appui de deux panneau voisin posées l'une sur l'autre. Chaque zone support comporte de préférence deux, voire encore mieux, trois parois parallèles dont l'une, supérieure, vient en contact d'un élément de couverture à assembler, et dont les deux autres sont placées de manière à pouvoir être, simultanément avec la première, traversée par une même vis, un même clou ou un même moyen d'accrochage de l'élément de couverture.

L'invention sera mieux comprise à l'étude de la description détaillée de quelques modes de réalisation pris à titre d'exemples nullement limitatifs et illustrés par les dessins annexés, sur lesquels :
- la figure 1 est un schéma en perspective d'une charpente comprenant un dispositif de ventilation selon un premier mode de réalisation de l'invention ;
- la figure 2 est une vue en coupe d'une charpente comprenant un dispositif de ventilation selon un deuxième mode de réalisation de l'invention ;
- la figure 3 est une vue en coupe d'une charpente comprenant un dispositif de ventilation selon un troisième mode de réalisation de l'invention ;
- la figure 4 est une vue de côté d'un panneau creux pour dispositif de ventilation selon l'invention;
- la figure 5 est une vue de côté montrant une utilisation possible du panneau creux de la figure 4, et
- la figure 6 est une vue de côté montrant une autre utilisation possible du panneau creux de la figure 4.
la figure 7 est une vue de côté d'un deuxième panneau creux pour dispositif de ventilation selon l'invention;
la figure 8 est une vue de côté d'un troisième panneau creux pour dispositif de ventilation selon l'invention;
la figure 9 est une vue de côté d'un quatrième panneau creux pour dispositif de ventilation selon l'invention;
la figure 10 est une vue en coupe longitudinale du panneau creux de la figure 9;

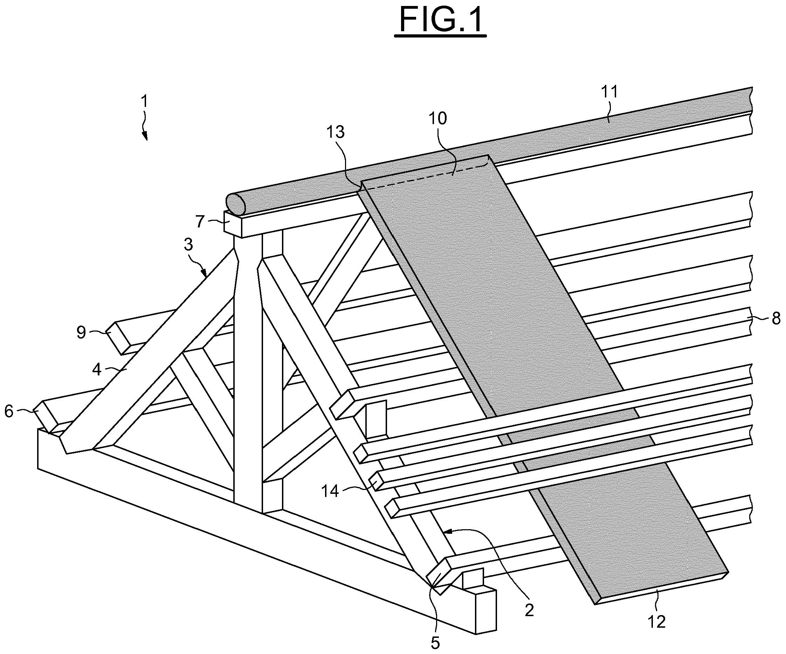

Sur la figure 1 est représenté un schéma en perspective d'un système de charpente 1 à deux pentes 2 et 3 (ou deux versants ou deux rampants) selon un premier mode de réalisation de l'invention. La charpente 1 comprend par exemple une ferme 4, deux pannes sablières 5, 6, une panne faitière 7 et deux pannes intermédiaires 8, 9. En particulier, chaque pente 2, 3 de la charpente 1 comprend une panne sablière et une panne intermédiaire, et les deux pentes 2, 3 se rejoignent au niveau de la panne faitière 7. Alternativement, la charpente 1 peut comprendre deux pannes faitières, une pour chaque pente. Les pannes 5, 6, 7, 8 et 9 sont par exemple fixées par une de leurs extrémités, sur la ferme 4.

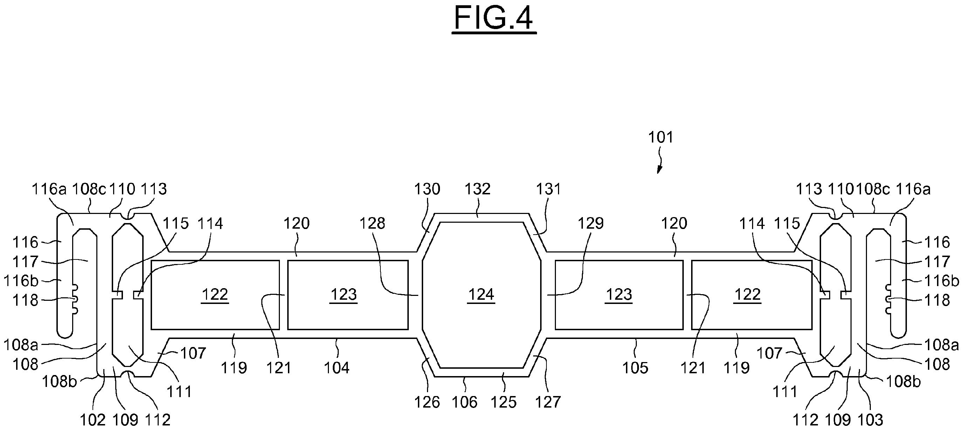

La charpente 1 comprend également au moins un panneau creux 10 selon la présente invention, monté sur les trois pannes 5, 7 et 8 d'une des pentes 2 de la charpente. Le panneau creux 10 est monté ici sur la panne sablière 5 et la panne faitière 7 afin de couvrir la charpente sur toute la longueur de la ligne de plus grande pente de la pente 2. Des géométries de panneaux creux 10 selon l'invention sont décrites plus en détail sur les figures 4 à 10 qui suivent. Pour limiter les masses et les dimensions maximales des panneaux à manipuler pour réaliser la toiture, des variantes de réalisation sont envisageables, pour des toitures avec des pentes de grandes surfaces, dans lesquels plusieurs panneaux (par exemple deux ou trois) sont posés de manière à se suivre suivant la ligne de plus grande pente du toit. Les panneaux creux peuvent alors soit se chevaucher à leurs extrémités comme une tuile amont et une tuile aval, soit être imbriqués par leurs extrémités, à l'aide d'une pièce de raccord adaptée, de manière à faire communiquer les ouvertures de deux panneaux voisins et à définir une même lame d'air. Dans le cas où deux panneaux se chevauchent, chaque rangés horizontale de panneaux creux peut être munie d'un collecteur dédié, afin que l'aspiration de la lame d'air traversant les panneaux se fasse avec une perte de charge réduite par rapport à une aspiration sur toute la hauteur de la toiture.

Le système de charpente 1 comprend également un collecteur d'air monté ici à proximité de la panne faitière 7 et en communication avec la lame d'air du panneau creux 10. Le panneau creux 10 et le collecteur d'air font partie d'un dispositif de ventilation selon la présente invention. Le collecteur d'air peut ainsi comprendre une conduite 11 montée le long de la panne faitière 7 et apte à acheminer l'air issu des panneaux creux 10 vers l'une des extrémités de la conduite 11, ou vers un autre point de prélèvement de l'air circulant dans la conduite 11. La conduite 11 peut ainsi comprendre des ouvertures d'extrémités permettant la circulation d'air entre les panneaux creux et la conduite 11.

Plus précisément, le panneau creux 10 comprend deux ouvertures 12 et 13. Les deux ouvertures 12 et 13 sont opposées dans le sens longitudinal du panneau creux 10. Le panneau est placé sur la charpente de manière que la première ouverture 12 est située en partie basse du panneau creux 10. La première ouverture 12 est ici une ouverture d'extrémité parallèle à la panne sablière (c'est-à-dire s'étendant parallèlement à un petit côté du panneau creux 10). La première ouverture 12 est montée à proximité de la panne sablière de la charpente 1, et est en communication avec l'air extérieur. La deuxième ouverture 13 se trouve ici en partie haute du panneau creux 10. La deuxième ouverture 13 forme une ouverture d'extrémité parallèle à la panne faitière 7 (c'est-à-dire s'étendant parallèlement à un petit côté du panneau creux 10). La deuxième ouverture 13 est montée à proximité de la panne faitière 7 de la charpente 1, et est en communication avec la conduite 11. La deuxième ouverture 13 permet une circulation de la lame d'air du panneau creux 10 vers la conduite 11.

Selon un mode de réalisation, la conduite 11 peut comprendre une fente d'extrémité destinée à venir en regard de la deuxième ouverture 13 du panneau creux 10, afin de permettre la circulation de l'air entre le panneau creux 10 et la conduite 11. Dans ce cas, l'extrémité du panneau creux 10 présentant la deuxième ouverture 13 peut venir s'emboiter dans la fente latérale de la conduite 11. Alternativement, la conduite 11 peut présenter un ou plusieurs perçages radiaux en regard de la deuxième ouverture 13 du panneau creux 10, auquel cas le panneau creux 10 peut être fixé ou simplement appuyé par l'extrémité présentant la deuxième ouverture 13 contre la conduite 11.

Le collecteur d'air 2. comprend également un moyen d'ouverture (non représenté), tel que par exemple un clapet ou une vanne, monté par exemple à une extrémité de la conduite 11, et apte à permettre ou à empêcher la circulation d'air entre la conduite 11 et l'intérieur du bâtiment. Le degré d'ouverture du moyen d'ouverture peut être pilotable de manière variable, ou de manière à pouvoir sélectionner plusieurs degrés d'ouverture différents. Le système de ventilation peut comprendre un système de type VMC (« ventilation mécanique contrôlée ») comprenant un ventilateur pour amener l'air issu du ou des panneaux creux 10 à l'intérieur du bâtiment. La VMC, qui peut être remplacée par tout autre système de pompage d'air, peut être placée de manière à aspirer l'air à partir du collecteur d'air, et à diriger cet air vers le moyen d'ouverture ou vers une canalisation à partir de laquelle cet air peut être dirigé en proportions variables vers l'intérieur du bâtiment et vers l'extérieur du bâtiment. Selon une variante de réalisation, le moyen d'ouverture peut comprendre un clapet apte à laisser ou à empêcher l'air issu du ou des panneaux creux d'entrer dans le bâtiment. Le moyen d'ouverture est commandé en fonction de la différence de température entre la température de l'air dans le collecteur d'air et celle de l'air intérieur du bâtiment. Le collecteur d'air peut comprendre des capteurs de température transmettant des valeurs de mesures à une unité de commande électronique apte à commander le ventilateur et/ou le clapet du moyen d'ouverture.

Ainsi, en hiver, lorsque la température de la lame d'air augmente sous l'effet du soleil et que le moyen d'ouverture est en position ouverte, l'air chaud tend naturellement à s'écouler vers le haut du panneau creux 10 pour entrer dans le collecteur d'air. L'air chaud est ensuite acheminé vers le moyen d'ouverture par lequel il est introduit dans le bâtiment. Il est alors possible de ventiler le bâtiment avec de l'air réchauffé par le soleil, afin de limiter les dépenses de chauffage. Au contraire, en absence de soleil (par exemple durant la nuit), il est possible de fermer le moyen d'ouverture afin d'éviter l'entrée d'air frais.

A l'inverse, en été, lorsqu'il est nécessaire de rafraichir le bâtiment, le moyen d'ouverture peut être placé en position ouverte la nuit pour permettre l'entrée d'air extérieur via les panneaux creux et la conduite 11. Durant la journée, le moyen d'ouverture peut être placé en position fermée pour empêcher l'air réchauffé dans les panneaux creux de rentrer dans le bâtiment.

La charpente 1 peut également comprendre des liteaux 14 montés sur le panneau creux 10 et permettant la fixation de tuiles, ou bien encore des voligeages (non-représentés) montés également sur le panneau creux 10 et permettant la fixation d'ardoises, ou enfin des panneaux solaires, par exemple photovoltaïques, montés sur le panneau creux 10, par exemple vissés ou cloués directement sur le panneau creux

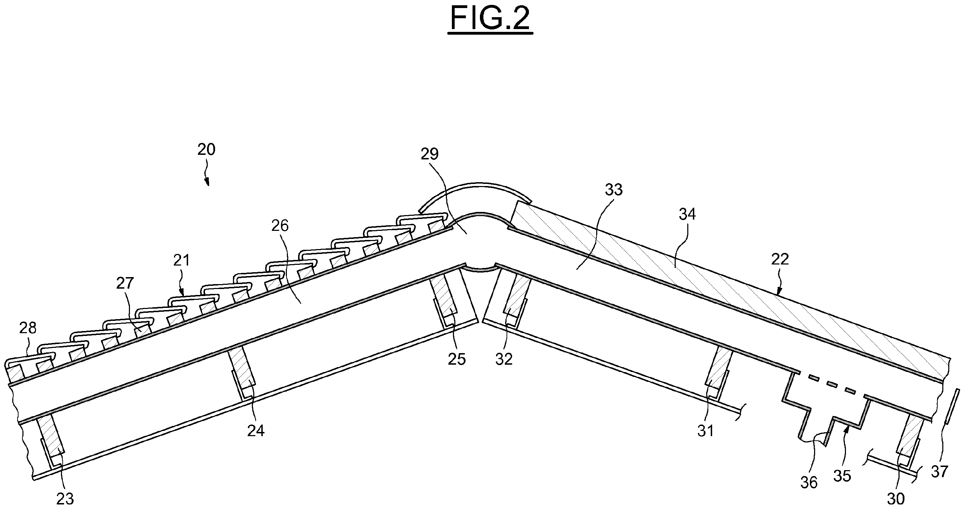

La figure 2 représente une coupe d'une charpente 20 comprenant un dispositif de ventilation selon un deuxième mode de réalisation de l'invention. La charpente 20 comprend deux pentes (ou versants ou rampants) : une pente 21 qui sera désignée dans la suite par le versant nord, et une pente 22 qui sera désignée dans la suite par le versant sud.

Le versant nord 21 de la charpente 20 comprend une panne sablière 23, une panne intermédiaire 24 et une panne faitière 25 sur lesquelles est posé un panneau creux 26. L'espace séparant les pannes 23, 24 et 25 peut être rempli avec un isolant thermique, par exemple de la fibre de verre. Des liteaux 27 sont montés sur le panneau creux 26 afin de permettre l'installation de tuiles 28. Un moyen de liaison aéraulique 29 est monté à proximité du faîte du toit, près de la panne faitière 25, en communication avec la lame d'air du panneau creux 26.

Le versant sud 22 de la charpente 20 comprend une panne sablière 30, une panne intermédiaire 31 et une panne faitière 32 sur lesquelles est posé un panneau creux 33. L'espace séparant les pannes 30, 31 et 32 peut être rempli avec un isolant thermique, par exemple de la fibre de verre. Un panneau solaire 34, par exemple photovoltaïque, est monté sur le panneau creux 33. Le moyen de liaison 29 est également mis en communication avec la lame d'air du panneau creux 33 et permet donc de relier les deux lames ensemble.

Le dispositif de ventilation comprend également un collecteur 35 monté sur la surface inférieure du panneau 33 monté sur le versant sud. Le collecteur 35 est monté en communication avec la lame d'air du panneau creux 33, qui est elle-même en communication avec la lame d'air du panneau creux 26. Un moyen d'ouverture 36 est monté sur le collecteur 35, et permet la circulation de l'air issu de la lame d'air vers l'intérieur du bâtiment. Enfin, un moyen de fermeture commandé 37 est monté sur une ouverture d'extrémité du panneau creux 33, et permet de mettre ou non en communication la lame d'air du panneau creux 33 avec l'air extérieur.

Plus précisément, l'air provenant du panneau creux 26 circule vers le moyen de liaison 29 puis entre dans la lame d'air du panneau creux 33 dans lequel il est chauffé. Il est alors aspiré, par exemple par un ventilateur non représenté, au niveau du collecteur d'air 35 et est introduit à l'intérieur du bâtiment. Un tel processus se produit notamment lorsqu'il y a un besoin d'air chaud à l'intérieur du bâtiment. Dans ce cas, le moyen de fermeture 37 est en position fermée, de manière à empêcher l'air d'entrer directement dans la lame d'air du panneau creux 33.

Au contraire, lorsque la température du bâtiment est modérée, le moyen de fermeture 37 peut être ouvert (partiellement ou entièrement), afin de laisser passer l'air dans le panneau creux 33. Dans ce cas, l'air aspiré vers le collecteur 35 provient à la fois du panneau creux 26 (air chauffé) et de l'extérieur via le moyen de fermeture 37. Le moyen de fermeture 37 permet ainsi de contrôler la quantité d'air entrant directement dans le panneau creux 33 et donc de contrôler la température de l'air injecté dans le bâtiment.

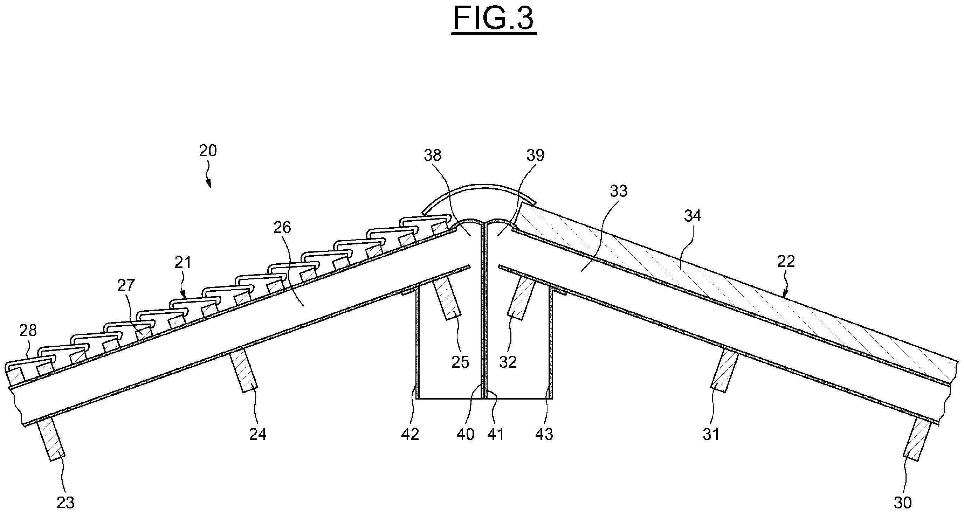

La figure 3 représente une coupe d'une charpente 20 comprenant un dispositif de ventilation selon un troisième mode de réalisation de l'invention. Selon le troisième mode de réalisation, le moyen de liaison du deuxième mode de réalisation est remplacé par deux conduites 38, 39 reliées chacune à la lame d'air d'un des panneaux creux 26, 33. Les deux conduites 38, 39 forment le collecteur du dispositif de ventilation et permettent de collecter l'air issu des panneaux creux 26 et 33.

Plus précisément, les conduites 38, 39 entourent respectivement la panne faitière 25 et la panne faitière 32. Il est ainsi plus aisé d'installer les conduites 38, 39 au niveau du faîte du toit. Par ailleurs, il est également possible d'exploiter cet espace généralement perdu, pour collecter et acheminer l'air issu des panneaux creux. Les conduites 38, 39 comprennent ainsi une première surface plane 40, 41, et une deuxième surface plane 42, 43 montées de part et d'autre des pannes faitières 25, 32, et délimitant un chemin de circulation entre une des ouvertures d'extrémités des panneaux creux 26, 33, et l'intérieur du bâtiment.

Le panneau photovoltaïque 34 du versant sud, exposé au soleil, permet de convertir l'énergie solaire en électricité. Cependant, et afin de garantir un rendement élevé, le panneau 34 est refroidi par une circulation d'air permettant d'évacuer les calories générées par le soleil. La circulation d'air a lieu dans le panneau creux 33 dont l'extrémité inférieure est en communication avec l'air extérieur et l'extrémité supérieure est en communication avec la conduite 39. L'air chauffé dans le panneau creux 33 s'écoule vers la conduite 39 et peut être utilisé pour ventiler le bâtiment tout en limitant les pertes thermiques de ce dernier, notamment en hiver.

A l'inverse, le versant nord est faiblement exposé au soleil, et permet de récupérer, dans la conduite 38, un air frais qui peut être utilisé pour ventiler le bâtiment pendant l'été par exemple.

Ainsi, cette variante de réalisation de l'invention permet de disposer d'un air réchauffé ou d'un air frais qui peuvent être utilisés en combinaison ou indépendamment, selon les besoins thermiques du bâtiment. En particulier, l'air issu du panneau creux 33 et l'air issu du panneau creux 26 peuvent être mélangés afin d'obtenir la température d'air de ventilation voulue. Selon d'autres variantes de réalisation, les flux d'air issus du panneau creux 33 et les flux d'air issus du panneau creux 26 peuvent être régulés indépendamment en débit total et en proportion de flux renvoyée vers l'intérieur du bâtiment.

Les figures 4 à 10 décrivent de manière plus détaillée, des formes de panneau creux 101 particulièrement adaptés pour un dispositif de ventilation selon l'invention. Tel qu'illustré sur la figure 4, le panneau creux 101 comprend deux portions d'extrémité 102 et 103, deux portions centrales 104 et 105 et une portion de renfort 106 disposée entre les portions centrales 104 et 105. Le panneau creux 101 est de forme rectangulaire plate, par exemple de longueur égale à 3, 6, 9 ou 12m, de largeur de 0,2 à 0,5m et d'épaisseur maximale de l'ordre de 45mm. On pourrait bien entendu prévoir des dimensions différentes, notamment des longueurs supérieures pour réaliser la couverture de bâtiments de grandes dimensions.

Toutefois, on dimensionne de préférence le panneau creux 101 de manière à lui conserver des dimensions pratiques pour son transport par voie routière, sa manutention à la main et par chariot élévateur. On peut ainsi concevoir les dimensions du panneau creux pour qu'il ne dépasse pas une masse de l'ordre de 25kg, par exemple une masse comprise entre 15kg et 30kg. Un panneau de 25kg qui correspond environ à des dimensions de 12m x 0,25m, la masse surfacique d'un panneau creux 101 étant de l'ordre de 8kg par m² ce qui est environ 50% plus léger que les tôles en fibro-ciment parfois utilisées et ce qui permet de réduire le coût de la charpente devant supporter ces panneaux creux. Même si le panneau creux dépasse ces dimensions, on dimensionne la section du panneau creux de préférence de manière à ce que la masse surfacique du panneau creux soit comprise entre 6kgm⁻² et 15kgm⁻². Le panneau creux peut ainsi être aisément déplacé en soulevant une de ses extrémités et en le traînant en appui sur son autre extrémité.

Comme on peut le voir sur la figure 4, les portions d'extrémité 102 et 103 étant symétriques, seule la portion d'extrémité 102 sera décrite. La portion d'extrémité 102 s'étend sur toute la longueur du panneau creux 101 et comprend une première paroi frontale 107 adjacente à la portion centrale 104 et d'épaisseur supérieure à celle-ci, une seconde paroi frontale 108 sensiblement parallèle à la première paroi frontale 107 et reliée à celle-ci par une paroi inférieure 109 et une paroi supérieure 110. Les parois frontales 107 et 108, la paroi inférieure 109 et la paroi supérieure 110 définissent un creux formant un espace libre 111 rempli d'air et s'étendant sur toute la longueur du panneau creux 101.

Les parois inférieure 109 et supérieure 110 sont chacune pourvues d'une zone de faible épaisseur 112 et 113 aptes à recevoir des clous ou des vis de fixation du panneau creux 101 sur la charpente d'un bâtiment devant être recouvert. Pour faciliter encore la pose de clous ou de vis, deux nervures longitudinales 114 et 115 issues respectivement des parois frontales 107 et 108 et disposées à mi-hauteur font saillie dans l'espace libre 111, en regard l'une de l'autre pour former un moyen de guidage des clous ou des vis.

La deuxième paroi frontale 108 comprend une surface frontale longitudinale 108a qui se termine par un bord inférieur 108b et un bord supérieur 108c adjacent respectivement à la paroi inférieure 109 et à la paroi supérieure 110. Les parois inférieure 109 et supérieure 110 sont planes, parallèles entre elles et coplanaires avec les parois correspondantes de la portion d'extrémité 103 de façon à présenter des surfaces planes suffisantes de contact avec une charpente de support.

A partir du bord supérieure 108c de la surface frontale d'extrémité 108a de la paroi frontale 108 s'étend une protubérance 116. La protubérance 116 comprend une première partie 116a s'étendant dans le prolongement de la paroi supérieure 110 à l'opposé de la portion centrale 104 et une deuxième partie 116b s'étendant à partir de l'extrémité libre de la première partie 116a vers le bas et parallèlement à la surface frontale d'extrémité 108a, formant ainsi une rainure 117 entre la paroi frontale 108, la première partie 116a et la deuxième partie 116b de la protubérance 116. La protubérance 116 s'étend sur toute la longueur du panneau creux. La deuxième partie 116b de la protubérance 116 s'étend sur une partie seulement de l'épaisseur du panneau creux 101, par exemple sur 35mm pour une épaisseur totale de 45mm de la portion d'extrémité 102 et du panneau creux 101. La deuxième partie 116b de la protubérance 116 comprend des bossages 118 faisant saillie dans la rainure 117 en direction de la paroi frontale 108.

Sur la figure 4, la rainure 117 est ouverte vers le bas. Toutefois, le panneau creux 101 pourrait être utilisé dans l'autre sens, la rainure 117 étant alors ouverte vers le haut et formant une gouttière ou un canal.

Les portions centrales 104 et 105 étant identiques, seule la portion 104 sera décrite. La portion 104 comprend une paroi inférieure 119, une paroi supérieure 120 espacée de la paroi inférieure 119 et une entretoise 121 reliant les parois inférieure 119 et supérieure 120. Les parois inférieure 119 et supérieure 120 sont parallèles, de faible épaisseur définissant entre elles un espace intérieur divisé par l'entretoise 121 et formant deux passages longitudinaux 122 et 123 définissant des lames d'air. Les parois 119 et 120 peuvent être des parois pleines. Alternativement, la paroi 120 peut comprendre des ouvertures telles que des trous de faible diamètre, ou des ouvertures de dimensions comparables à la largeur transversale de la lame d'air. Les parois 119 et 120 peuvent comprendre des matériaux différents : la paroi supérieure 120 peut comprendre un matériau conducteur tandis que la paroi inférieure 119 peut comprendre un matériau isolant.

L'entretoise 121 est perpendiculaire aux parois inférieure 119 et supérieure 120, parallèle à la portion d'extrémité 102 et s'étend sur toute la longueur du panneau creux 101. Le passage 122 est défini entre la première paroi frontale 107 de la portion d'extrémité 102, la paroi inférieure 119, la paroi supérieure 120 et l'entretoise 121 de la portion centrale 104. Le passage 123 est défini entre la paroi inférieure 119, la paroi supérieure 120, l'entretoise 121 de la portion centrale 104, et la portion de renfort 106. Les passages 122 et 123 sont remplis d'air ce qui assure une excellente isolation entre un côté et l'autre du panneau creux 101 ; en outre, la circulation de la lame d'air permet de récupérer des calories rendues disponibles par l'échauffement du toit sous l'effet du rayonnement solaire.

La portion de renfort 106 est de forme octogonale creuse. Le creux formant un passage 124 s'étend sur toute la longueur du panneau creux 101 et définit une lame d'air. La portion de renfort 106 comprend une paroi inférieure d'appui 125 coplanaire avec les parois inférieures 109 des portions d'extrémité 102 et 103 et permettant à la portion de renfort 106 de venir s'appuyer en son milieu sur une charpente de support. A partir de chaque bord de la paroi inférieure 125, s'étendent de façon symétrique deux parois de liaison 126 et 127 formant un angle d'environ 60° avec la paroi inférieure 125 et se raccordant avec les parois inférieures 119 des portions centrales 104 et 105.

A partir de l'intersection entre les portions de liaison 126 et 127 et les parois inférieures 119 des portions centrales 104 et 105, s'étendent deux parois verticales 128 et 129 rejoignant les parois supérieures 120 des portions centrales 104 et 105, parallèles aux entretoises 121 des portions centrales 104 et 105 et assurant également une fonction d'entretoisement. La partie supérieure de la portion de renfort 106 est formée par des parois de liaison 130 et 131 et une paroi supérieure 132 et est symétrique de la partie inférieure formée la paroi inférieure 125 et les parois de liaison 126 et 127 par rapport à l'axe central du passage 124.

La masse surfacique du panneau creux 101 peut être modérée grâce à l'emploi d'un matériau thermoplastique recyclé dont la densité massique est réduite par l'adjonction de sciure de bois, et grâce à sa structure creuse. Il possède néanmoins d'excellentes qualités de rigidité grâce aux différentes parois verticales formant des entretoises et à la portion de renfort formant une nervure de rigidification. Le panneau est ainsi parcouru suivant la direction longitudinale par plusieurs poutres creuses qui lui donnent une bonne rigidité en flexion.

On pourrait, à titre de variante, prévoir un panneau creux 101 de plus grande largeur comprenant, deux, trois ou quatre portions de renfort 106 et trois, quatre ou cinq portions centrales correspondantes. On pourrait également concevoir un panneau creux 101, dépourvu de portion de renfort, comprenant une unique portion centrale, notamment pour des applications où le panneau creux 101 est de très grande longueur.

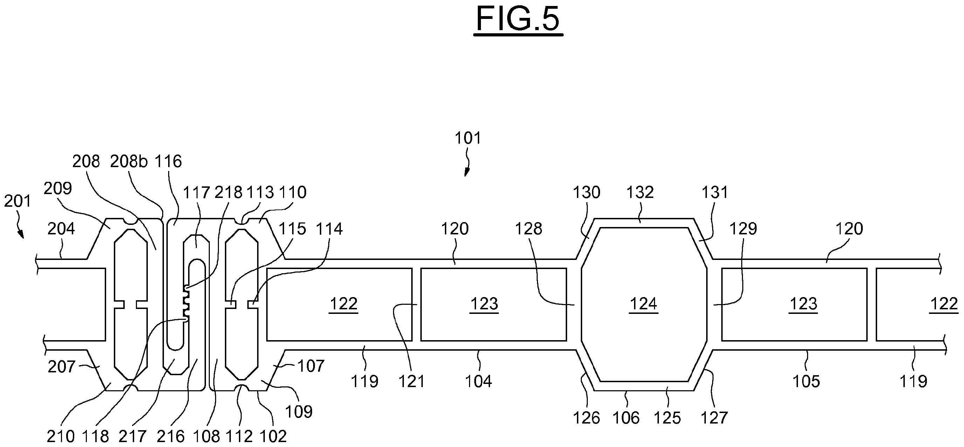

Sur la figure 5, on a représenté la coopération entre un premier panneau creux 101 et un second panneau creux 201 identique au premier panneau creux 101. Les parties du panneau creux 201 portent les références du panneau creux 101 augmentées du nombre 100. Le panneau creux 201 est disposé dans l'autre sens, sa protubérance 216 étant dirigée vers le haut et sa rainure 217 étant ouverte vers le haut. La protubérance 116 de la portion d'extrémité 102 du panneau creux 101 vient en saillie dans la rainure 217 du second panneau creux 201 et réciproquement.

D'éventuelles faibles quantités d'eau réussissant à s'introduire entre le bord 208b de la paroi frontale 208 du second panneau creux 201 et la protubérance 116 du premier panneau creux 101 seraient recueillies dans la rainure 217 formant gouttière du second panneau creux 201 et s'écouleraient vers le bas en suivant la pente desdits panneaux creux 101 et 201. Les bossages 118 et 218 présents sur la face interne des protubérances 116 et 216 des panneaux creux 101 et 201 viennent coopérer les uns avec les autres ce qui empêche une éventuelle remontée d'eau entre les deux protubérances 116 et 216 et réduit ainsi un risque de pénétration de l'eau à l'intérieur du bâtiment. De plus, ces protubérances 118 et 218 garantissent un accrochage satisfaisant des deux panneaux creux 101 et 201 ensemble et permettent le maintien d'un panneau creux n'ayant pas encore reçu de moyens de fixation tels que des clous ou des vis lors du montage des panneaux creux.

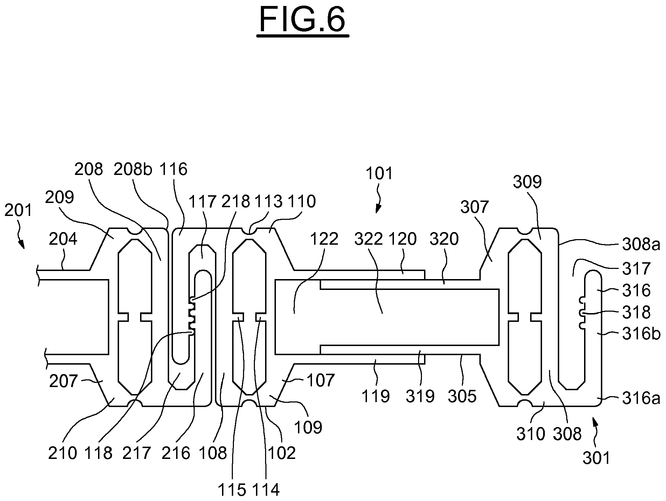

La portion centrale 104 peut être d'épaisseur légèrement supérieure à celle de la portion centrale 105. L'épaisseur de la portion centrale 105 est alors sensiblement égale à la hauteur des passages 122 et 123 de la portion centrale 104 de façon à pouvoir venir coopérer ensemble comme illustré sur la figure 6. En effet, le panneau creux 101 peut être facilement scié en longueur pour s'adapter à la largeur souhaitée par l'utilisateur au moyen d'une scie à main ou d'une scie électrique portative du genre utilisé pour le sciage de pièces de bois. Ainsi, le panneau creux 101 dont la portion d'extrémité 102 coopère toujours avec le panneau creux 201 a été coupé à proximité de l'entretoise 121 de la portion centrale 104 visible sur la figure 5 pour transformer le passage longitudinal 122 en une rainure ouverte qui est ainsi délimitée par la première paroi frontale 107 de la portion d'extrémité 102 et les portions subsistantes des parois inférieure 119 et supérieure 120 de la portion centrale 104.

Le troisième panneau creux 301 dont les parties portent des références augmentées du nombre 200 peut être formé à partir de l'autre portion d'extrémité, non représentée sur la figure 5, du panneau creux 101. Le panneau creux 301 a été découpé à proximité de l'entretoise non-représentée de sa portion centrale 305 de façon à transformer un passage longitudinal fermé en une rainure ouverte 322 de façon identique à la découpe effectuée sur le premier panneau creux 101. La portion centrale 305 du panneau creux 301, d'épaisseur sensiblement égale au passage 122 de la portion centrale 119 du panneau creux 101 vient s'emboîter dans ce creux 122 qui forme une rainure ouverte. La paroi supérieure 320 vient en contact contre la paroi supérieure 120 et la paroi inférieure 319 vient en contact contre la paroi inférieure 119.

On dispose ainsi d'une planche à largeur variable permettant d'effectuer des ajustages précis.

La présence de nombreux espaces creux longitudinaux et ouverts à leurs extrémités dans le panneau creux permet de définir plusieurs lames d'air pouvant être utilisées dans le dispositif de ventilation.

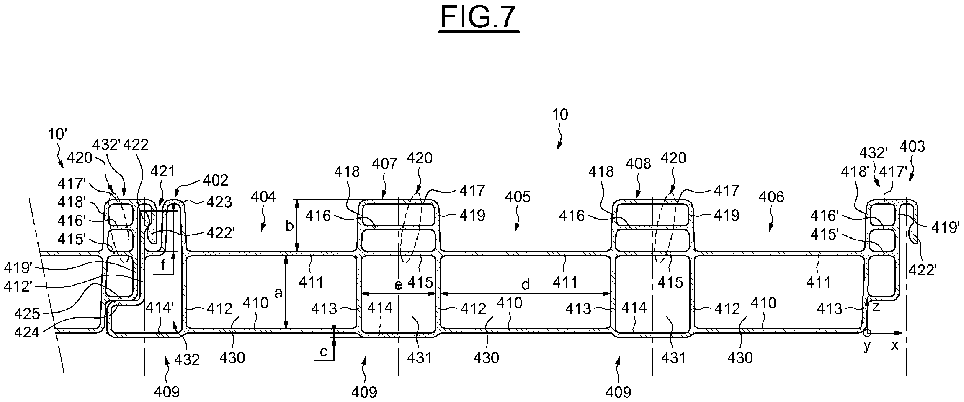

La figure 7 illustre une autre géométrie de panneau creux particulièrement adapté pour un système de ventilation selon l'invention. Comme le panneau creux de la figure 4, le panneau creux 10 de la figure 7 présente une géométrie de type profilé creux extrudé suivant une direction notée ici Y. La figure 7 représente une section droite du profilé dans un plan XX' Z', l'axe XX' correspondant à l'axe horizontal sur la figure et l'axe ZZ' correspondant sur la figure à l'axe vertical.

Dans toute la description, on désigne par direction transversale une direction parallèle à l'axe XX', par direction longitudinale une direction parallèle à l'axe YY' et par direction normale une direction parallèle à l'axe ZZ' c'est-à-dire une direction, une fois le panneau assemblé, normale à la pente de la toiture. Par « vers le haut » « horizontal » ou « vertical » concernant la description de la géométrie du panneau, on entend des directions relatives à un axe normal zz' du panneau, considéré comme vertical.

Dans le mode de réalisation illustré en figure 7, le panneau creux 10 comprend trois portions centrales 404, 405 et 406. La première portion centrale 404 et la seconde portion centrale 405 sont séparées par une première portion de renfort 407, la seconde portion centrale 405 et la troisième portion centrale 406 sont séparées par une seconde portion de renfort 408. Les portions de renfort 407,408 comprennent chacune une portion de poutre creuse s'étendant longitudinalement le long du panneau creux. La hauteur d'au moins une poutre creuse de chaque portion de renfort est de préférence au moins égale à la hauteur de la lame d'air. Sur la figure 7, les portions de renfort supportent chacune une portion de support 420 comportant une paroi plane supérieure surélevées par rapport aux parois 411, et adaptées à un assemblage, par exemple par vissage, d'un élément de couverture reposant sur les portions de support.

Les portions centrales latérales 404 et 406 sont respectivement bordées par une première portion d'extrémité 402 et par une seconde portion d'extrémité 403. Chacune des portions centrales 404, 405, 406 présente une géométrie de poutre creuse de section sensiblement rectangulaire, définie par une paroi inférieure 410, une paroi supérieure 411, une première paroi frontale 412 et une seconde paroi frontale 413.

Les quatre parois 410, 411, 412, 413 définissent un espace 430 de circulation dans lequel une lame d'air peut circuler suivant la direction longitudinale. De préférence, afin de faciliter la circulation de la lame d'air, l'espace 430 défini par les quatre parois pour la circulation de la lame d'air présente une hauteur « a » suivant l'axe normal qui est comprise entre 2 et 7 cm et de préférence comprise entre 2,5 cm et 5 cm.

La largeur « d » suivant l'axe transversal xx' de l'espace 430 est, de préférence, au moins égale à 5 cm pour au moins l'une des portions centrales du panneau. La largeur d des espaces 430 ou la largeur du plus large des espaces 430 suivant l'axe transversal peut être par exemple comprise entre 5 et 15 cm et de préférence supérieure ou égale à 6 cm. L'espace 430 destiné à la circulation d'une lame d'air s'entend comme un espace ne comportant pas d'autre paroi transversale autre que les parois délimitant le contour de l'espace 430 c'est-à-dire les parois 410, 411, 412, 413.

Chaque portion de renfort 407, 408 comprend deux parois frontales 412, 413, chacune mitoyenne avec une portion centrale bordant la portion de renfort, comporte au moins une paroi supérieure 415 et comporte une paroi de fond 414 sensiblement plane. La paroi de fond 414 définit un renflement 409 par rapport aux parois inférieures 410 des portions centrales, la paroi de fond 414 dépassant vers le bas d'une surépaisseur « c » par rapport au plan commun des parois inférieures 410 des portions centrales. La surépaisseur c peut être typiquement comprise entre 1 et 5 mm, et de préférence comprise entre 1,5 mm et 3 mm.

Cette surépaisseur c permet de poser le panneau creux 10 sur des poutres en bois formant pannes, en assurant à la fois une bonne stabilité du panneau sur les pannes, et en permettant aux pannes d'être aérées sous le panneau creux sur la majorité de la largeur du panneau creux à l'exception des zones en surépaisseur.

Une des portions d'extrémités, ici la première portion d'extrémité 402, présente également une paroi de fond 414' qui est en surépaisseur par rapport aux parois de fond 410 des portions centrales, cette paroi de fond 414' étant sensiblement alignée dans un plan commun avec les parois de fond 414 des portions de renfort 407, 408.

La seconde portion d'extrémité 403 ne présente pas de paroi inférieure en surépaisseur, car elle se termine en partie inférieure par une paroi horizontale formant surface d'appui inférieure 425 qui est au contraire déportée vers le haut par rapport aux parois de fond 410 des portions centrales.

Dans l'exemple illustré en figure 7, chaque portion de renfort 407, 708 définit également une section creuse 431 sensiblement rectangulaire voire carrée qui peut contribuer à la circulation d'air dans les panneaux creux suivant la direction longitudinale, même si la circulation d'air dans cette portion peut être sujette à des pertes de charge plus importantes que dans les portions centrales et dans l'espace 430, qui est dimensionné de manière plus adaptée à une circulation efficace d'une lame d'air.

La largeur « e » de la portion de renfort 407 ou 408 peut être par exemple comprise entre 0,2 et 5 fois la hauteur « a » de l'espace 430, par exemple de manière avantageuse comprise entre la moitié et une fois et demi la hauteur a de l'espace 430, de manière à permettre à la fois d'y ménager des portions 420 de support et vissage/assemblage décrites plus loin et de manière à ne pas trop empiéter, par rapport à la largeur totale du panneau 10, sur l'espace disponible pour le ou les espaces 430 de circulation des lames d'air.

La largeur d des espaces 430 est de préférence supérieure ou égale à au moins une fois et demi et de préférence supérieure ou égale à deux fois la hauteur « a » des espaces 430.

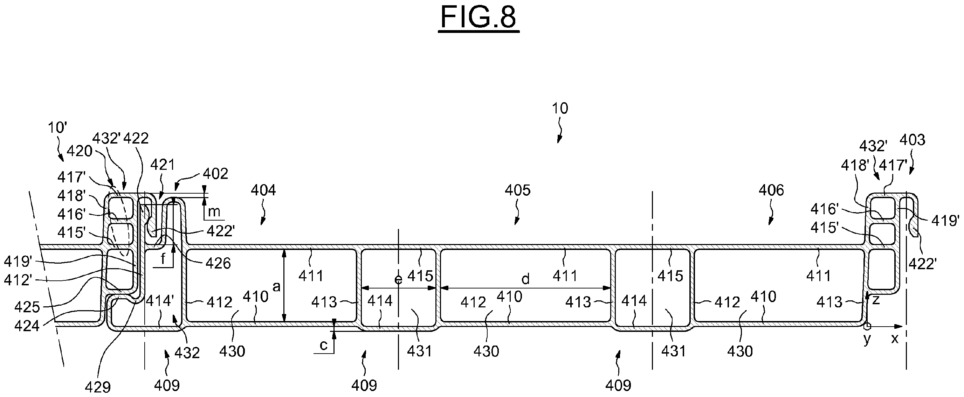

La paroi supérieure 415 des portions de renfort 407, 408 est ici sensiblement alignée dans un plan commun avec les parois supérieures 411 des portions centrales. On peut envisager des variantes de réalisation dans lesquelles la paroi supérieure 415 de la portion de renfort serait légèrement décalée, par exemple vers le haut, par rapport aux parois supérieures 411. On augmente ainsi la rigidité de la poutre creuse délimitée autour des espaces 431 traversant la portion de renfort. L'espace 431 peut également contribuer à une circulation d'air au travers du panneau creux. Les portions de renfort 407, 408 sont ici surmontées de portions support 420 qui sont ici de même largeur que les portions de renfort. On peut envisager des variantes de réalisation comme illustré par exemple à la figure 8, dans lesquelles les portions de renfort ou une partie des portions de renfort ne sont pas surmontées de portions de support en relief. On peut également envisager des variantes de réalisation dans lesquelles les portions de support présentent une largeur -suivant l'axe transversal xx'- différente des portions de renfort, par exemple une largeur supérieure si l'on souhaite assembler sur les portions de support un panneau qui est fragile à la flexion, ou au contraire une portion de support 420 de largeur réduite par rapport à la portion de renfort, pour augmenter la rigidité globale d'un assemblage par vissage. Les portions de support peuvent être placées ailleurs qu'au au dessus des portions de renfort.

La portion de support 420 comprend au moins une paroi horizontale 416 parallèle à la paroi supérieure 415 de la portion de renfort, cette paroi horizontale étant reliée à la portion de renfort par deux parois frontales 418 et 419, qui sont, dans l'exemple illustré en figure 7, dans le prolongement des parois frontales 412 et 413.

Dans l'exemple illustré en figure 7, la portion de support 420 comprend en outre une seconde paroi horizontale 417 située au dessus de la première paroi horizontale 416 et s'étend également entre les parois frontales 418 et 419.

La superposition des parois 415, 416 et 417 permet d'offrir à des vis insérées par en haut dans la portion de support 420, au moins deux et de préférence trois parois d'accroches successives, ce qui démultiplie la force d'arrachage nécessaire pour extraire par arrachage la vis, ou le moyen d'accrochage traversant. On peut envisager des variantes de réalisation avec seulement deux parois 415 et 416 en partie supérieure des portions de support 420. L'intervalle d entre les parois supérieures 411 des portions centrales et la paroi supérieure 416 ou 417 -suivant les variantes de réalisation- de la portion de support est typiquement compris entre 5 mm et 120 mm et est de préférence compris entre 5 et 60 mm.

On peut envisager des variantes de réalisation dans lesquelles la paroi supérieure 415 de la zone de renfort se trouve au-dessus des parois supérieures 411 des portions centrales de manière à garder deux ou trois parois d'accrochage des vis rapprochées tout en augmentant la hauteur b de dénivelé entre les panneaux ou les liteaux posés sur le panneau creux et le panneau creux lui-même.

L'épaisseur des parois 415, 416, 417 peut être comparable à celle des parois 410, 411, 412, 413 délimitant les portions centrales ou peut être plus épaisse, par exemple peut être une épaisseur comprise entre 105% et 250% de l'épaisseur maximale des parois inférieures et supérieures des portions centrales. On augmente ainsi la force d'arrachage nécessaire pour arracher un assemblage de type par exemple vissé.

La première portion d'extrémité 402 et la seconde portion d'extrémité 403 sont configurées de manière à pouvoir être insérées l'une dans l'autre par insertion verticale d'un panneau par rapport au panneau voisin, par exemple en positionnant la seconde portion d'assemblage 403 d'un second panneau creux 10'au-dessus de la portion d'assemblage 402 d'un premier panneau creux 10, en insérant une languette descendante 422' du second panneau dans une gouttière bordée par une languette montante 422 du premier panneau 10.

Pour permettre ce type d'assemblage, la première portion d'extrémité 402 comprend une portion formant poutre creuse 432 comprenant une paroi frontale 412 de la première portion centrale 404, bordée par une paroi de fond 414' sensiblement horizontale et comprenant une seconde paroi frontale 412' également verticale.

Une portion du contour de la poutre creuse 432 joint la paroi 412' et la paroi 414' de fond de manière à former un rebord avec une surface plane horizontale supérieure d'appui 424. Une autre portion du contour de la poutre creuse 432 forme une portion rehaussée 423 entre la paroi frontale 412' et la paroi frontale 412. La portion rehaussée 423 s'élève au dessus des portions centrales et forme une gouttière ouverte vers le haut bordée d'un côté par la portion rehaussée 423 et du côté extrémal au panneau par une languette montante 422.

La languette montante 422 s'étend de préférence sur toute la longueur longitudinale du panneau creux 10.

La surface d'appui supérieure 424 sensiblement horizontale forme un épaulement sur lequel vient se poser au moment de l'assemblage de deux panneaux voisins, une surface d'appui inférieure 425 de la seconde portion d'extrémité 403 d'un autre panneau 10'.

La surface d'appui inférieure 425 de la portion d'extrémité 403 fait partie du contour d'une poutre creuse 432'appartenant à cette seconde portion d'extrémité. La surface d'appui inférieure 425 est décalée vers le haut par rapport à la paroi de fond 410 de la portion centrale voisine du même panneau, et qui est en porte-à-faux par rapport à cette paroi de fond 410, de manière à pouvoir venir se poser sur la surface d'appui supérieure 424 du panneau voisin.

Comme déjà mentionné précédemment, la paroi de fond 414' de la première portion d'extrémité 402, forme vers le bas un renflement 409 par rapport aux parois inférieures 410 des portions centrales.

La poutre creuse 432' comprend une paroi frontale 419' venant se positionner contre la paroi frontale 412 du panneau voisin. La jonction entre la paroi frontale419' et la surface inférieure d'appui 425, ou la jonction entre la paroi frontale 41' et la surface supérieure d'appui 424 peut être munie d'un relief en forme de gouttière, de manière à faciliter un positionnement en butée des deux poutres creuses 432 et 432' l'une contre l'autre sans être handicapé par d'éventuelles variations de géométrie de fabrication au niveau des rayons de courbure joignant les surfaces horizontales et les surfaces verticales.

Par exemple, sur la figure 8, on voit une telle gouttière d'ajustement 429 facilitant le positionnement du panneau de gauche 10' sur le panneau creux de droite 10. La figure 8 reprend par ailleurs des éléments communs à la figure 7, les mêmes éléments étant désignés par les mêmes références.

La seconde portion d'extrémité 403 comporte en outre une portion de support 420, qui comme les portions de support 420 des portions de renfort 407 et 408, comporte au moins une paroi 416' parallèle à une paroi 415'. La paroi 415' se trouve ici dans le prolongement des parois supérieures 411 de la portion centrale 406 attenante à la portion d'extrémité 403.

Dans l'exemple illustré en figure 7, la seconde portion d'extrémité 403 comprend une seconde paroi 417' parallèle aux parois 415' et 416' et disposée au-dessus de celles-ci.

Des panneaux fonctionnels peuvent ainsi venir en appui, suivant les variantes de réalisation, soit uniquement sur les parois supérieures 417' des portions d'extrémités 403, soit venir en appui simultanément sur les parois supérieures 417' des portions d'extrémités 403 et les parois supérieures 417 d'au moins une des portions de renfort 407 et/ou 408. Un panneau de couverture peut soit être posé de manière à ce que les extrémités reposent uniquement sur deux parois 417' ou sur deux paroi 417', 417 du panneau creux 10. Le panneau de couverture peut être assemblé au niveau de ses bordures en insérant des vis, des clous ou d'autres moyens d'accrochage au travers du panneau de couverture et au travers d'au moins deux, et de préférence au travers de trois parois du panneau creux 10, de niveau des portions de support 420. Les portions de support peuvent être utilisées pour un assemblage par vissage ou un assemblage utilisant tout autre moyen d'accrochage traversant au moins une paroi du panneau creux.

La paroi supérieure 417' de la portion d'extrémité 403 se prolonge vers le bas par une languette descendante 422' qui vient s'insérer dans la gouttière délimitée par la languette montante 422 et par la portion rehaussée 423.

De manière préférentielle, une fois que la surface d'appui inférieure 425 d'un panneau 10' est posée sur la surface d'appui supérieure 424 d'un panneau 10, la hauteur par rapport à la paroi d'appui inférieure 414' de la première portion d'extrémité 402 du panneau 10, de la paroi 417' est plus élevée que la hauteur maximale de la portion rehaussée 423. De manière plus générale, selon un mode de réalisation préféré, celle des portions d'extrémités qui porte une portion de support culmine, une fois assemblée, à une hauteur supérieure à la portion d'extrémité à laquelle elle est assemblée.

La différence de hauteur, notée « m » sur la figure 8, permet d'éviter, en cas d'écart dimensionnel de la fabrication, d'exercer des contraintes risquant d'arracher un panneau de couverture fixé sur la portion d'extrémité 403 et s'étendant de la portion d'extrémité 403 au-dessus de la portion d'extrémité 402 du panneau creux voisin. On prévoit bien sûr un jeu vertical ε entre le haut de la languette montante 422 et le prolongement de la paroi 417' reliant la languette descendante 422' et la paroi 417' de manière à ce que la languette descendante puisse s'insérer à côté de la languette montante quasiment sans déformation de la languette descendante.

La profondeur f de la gouttière 421 réservée entre la languette montante 422 et la portion rehaussée 423 permet de canaliser et de retenir d'éventuelles infiltrations d'eau qui viendraient tomber sur un assemblage de panneaux creux à l'endroit de la jonction entre ces panneaux creux. Cette profondeur de gouttière est supérieure à 5 mm et est de préférence supérieure à 10 mm par exemple comprise entre 15 et 50 mm.

Sur les parois supérieures 417 et 417' des portions de support du panneau creux, il est ainsi possible d'assembler directement des panneaux de couverture tels que des panneaux solaires, ou il est possible d'ajouter une couverture classique par exemple en glissant ou en clouant sur les parois 417, 417' des liteaux suivant la direction transversale XX' et en posant des tuiles classiques sur ces liteaux. Dans certains cas le panneau creux 10 peut être directement utilisé comme panneau de couverture extérieure, voire être utilisé indépendamment d'un système actif de circulation d'air dans le panneau.

Dans le cas où d'autres éléments de couverture sont assemblés par-dessus les panneaux creux 10, au moins deux types de lame d'air tendent à s'établir sous la toiture : une première série de lames d'air circulant dans les espaces 430 dédiés à la ventilation et une seconde série de lames d'air circulant entre le panneau creux 10 et l'élément de couverture supérieur, par exemple un panneau solaire.

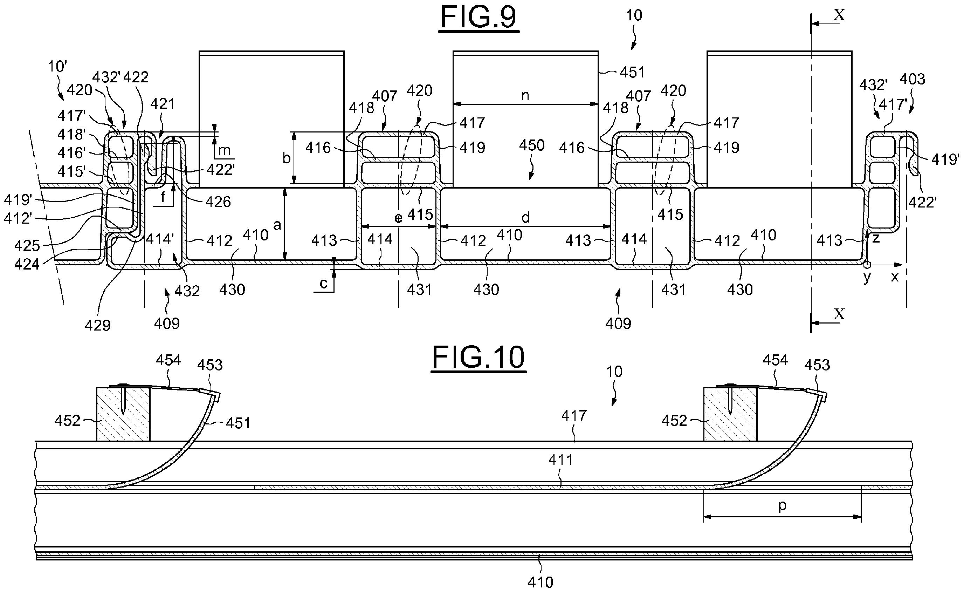

La canalisation vers le collecteur des lames d'air circulant dans les espaces 430 permet déjà de récupérer des calories liées à l'échauffement par ensoleillement de la toiture. Dans certaines variantes de réalisation, afin d'améliorer encore cette récupération de calories, et dans certains cas pour améliorer le refroidissement d'un panneau fonctionnel assemblé par-dessus le panneau creux 10, le panneau creux 10 peut être muni d'ouvertures permettant d'aspirer une partie de l'air circulant dans la lame s'établissant entre les parois supérieures 411 du panneau creux et l'élément supérieur de couverture. Les figures 9 et 10 illustrent un mode de réalisation avec de telles ouvertures. Les figures 9 et 10 reprennent par ailleurs des éléments communs à la figure 7, les mêmes éléments étant désignés par les mêmes références.

De telles ouvertures peuvent être découpées par exemple juste après avoir extrudé la géométrie de base du panneau creux, avant que le matériau du panneau ait acquis sa rigidité finale. Il est également possible de découper ces ouvertures a posteriori par exemple au moyen d'une fraise d'une scie.

Ces ouvertures peuvent être des ouvertures définies par un contour fermé ou peuvent être des ouvertures comportant un volet de canalisation de l'air circulant au dessus du panneau creux tel qu'illustré sur les figures 9 et 10.

De telles ouvertures à volet peuvent être obtenues en découpant un contour non fermé d'ouvertures dans une paroi supérieure 411 et en soulevant la portion de surface ainsi délimitée autour d'une charnière définie par la ligne rejoignant les deux extrémités du contour de découpe.

Dans l'exemple illustré en figures 9 et 10, le panneau creux 10 est ainsi muni d'orifices rectangulaires 450 bordés par un volet 451 soulevé par rapport à une charnière s'étendant suivi l'axe transversal XX'. De tels volets peuvent être découpés en effectuant deux entailles dans le sens longitudinal et une entaille dans le sens transversal, les trois entailles ne se rejoignant pas complètement et les entailles longitudinales ayant la même longueur. Ensuite, suivant les besoins lorsque l'on pose le panneau sur le bâtiment on peut choisir d'ouvrir ou non l'ouverture 450 ainsi délimitée. On peut à cette fin utiliser par exemple un petit crochet en tôle permettant de déchirer la portion de matière reliant les trois entailles et permettant de soulever le volet 451 jusqu'à la hauteur souhaitée. Dans l'exemple illustré sur les figures 9 et 10, la hauteur du volet soulevé est supérieure à la hauteur des parois supérieures 417 et 417' car on a posé des liteaux 452 afin par exemple de poser une toiture classique et la hauteur de la lame d'air circulant au dessus du panneau 10 est donc augmentée de la hauteur du liteau 452.

Si le panneau 10 est utilisé par exemple comme support pour des panneaux solaires, il est possible de ne soulever les volets 451 que jusqu'à la hauteur permise par le panneau solaire. Une fois soulevés, les volets 451 peuvent être maintenus en position soulevée par exemple au moyen d'un crochet 453 en tôle pliée assemblé à une sangle ou à un câble 454 lui-même arrimé à un liteau ou au panneau 10, de manière à exercer sur le volet 451 un effort de traction maintenant ce volet ouvert.

Pour tenir compte de la perte de charge entre une extrémité du panneau creux 10 situé en partie inférieure de la toiture et l'extrémité supérieure du panneau 10 proche du collecteur, la taille et/ou l'espacement des ouvertures 450 peut être variable d'une extrémité à l'autre du panneau creux lorsqu'on se déplace suivant la direction longitudinale du panneau creux.

Les ouvertures 450 peuvent être ainsi plus fréquentes et/ou plus grandes du côté du panneau creux correspondant au côté vers lequel s'ouvrent les volets 451, c'est-à-dire le côté vers lequel sont tournés les bords ouverts des volets 451. Couvertures peuvent être moins nombreuses et/ou de dimensions plus réduites du côté du panneau creux correspondant au côté vers lequel sont tournées les charnières des volets 451. Dans le cas où les ouvertures ne comportent pas de volets, on peut simplement avoir une variation de taille et/ou une variation de dimension des ouvertures entre les deux extrémités du panneau suivant la direction longitudinale du panneau creux. Dans le cas où les ouvertures sont des ouvertures rectangulaires, la largeur « p » suivant la direction transversale du panneau creux des ouvertures peut être typiquement comprise entre 0,1 et 0,9 fois la largeur « d » entre deux portions de renfort ou entre 0,1 et 0,9 fois la largeur entre une portion de renfort et une portion d'extrémité.

De manière préférentielle, les ouvertures les plus larges ont une largeur comprise entre 0,6 et 0,9 fois cette largeur disponible. Dans le cas où les ouvertures 450 sont munies de volets 451, la longueur des découpes des ouvertures 450 suivant la direction longitudinale est de préférence supérieure ou égale à 1,3 fois la hauteur b de l'espace disponible entre les parois 411 et le haut du panneau creux, de manière à pouvoir soulever les volets 451 sans les mettre à angle droit et qu'ils couvrent tout de même une portion de hauteur intéressante de la lame d'air circulant au dessus du panneau creux.

L'invention ne se limite pas aux exemples de réalisation décrits et peut se décliner en de nombreuses variantes inscrites dans le cadre défini par les revendications. On peut par exemple dimensionner les portions centrales de manière à ce qu'au moins l'une des portions centrales d'un même panneau présente une épaisseur différente des deux autres portions centrales, de manière à pouvoir découper le panneau dans le sens longitudinal et réassembler deux portions centrales en les insérant l'une à l'intérieur de l'autre suivant l'axe de manière similaire au montage illustré en figure 6.

On peut envisager des variantes de réalisation avec uniquement une portion centrale bordée par deux portions d'extrémités telles que décrites précédemment. On peut envisager de percer dans les parois supérieures du panneau creux 10 des ouvertures de forme quelconque pour aspirer l'air circulant au dessus du panneau creux, par exemple des ouvertures rondes ovales, demi ellipsoïdales, triangulaires, avec ou sans volet. On peut envisager de découper plusieurs ouvertures sur la largeur d'une des portions centrales, même sans effectuer de multi perçage de type grille. Les ouvertures peuvent être alignés suivant une même direction longitudinale, ou être disposées en quinconce.

Les zones d'extrémités ou zones d'assemblage du panneau creux peuvent présenter des surfaces sensiblement horizontales formant butées lors d'un emboîtement vertical des zones d'assemblage de deux panneaux creux voisins, sans que ces surfaces sensiblement horizontales appartiennent à une poutre creuse de contours distincts de contours guidant une lame d'air du panneau creux. Le panneau creux peut comporter deux zones d'assemblage dont aucune ne comporte de zones support en relief, ou dont la hauteur de relief des zones d'assemblage est inférieure à la hauteur de relief de zones support présentes sur le panneau. Le panneau creux peut comporter deux zones d'assemblage destinées à s'emboîter horizontalement dans les zones d'assemblages de panneaux voisins, par exemple suivant des rebords d'emboîtement de type lames de parquet. Un emboîtement vertical des panneaux creux est cependant plus aisé à mettre en oeuvre, car l'ajustement de position entre deux panneaux voisins peut être plus facilement propagé d'en bout à l'autre du panneau en cours d'assemblage.

Des modes alternatifs de régulation des débits d'air sont envisageables.

Le dispositif peut comprendre une unité de commande électronique configurée pour faire varier le débit d'air passant dans le panneau creux et/ou pour faire varier l'endroit ou est envoyé l'air collecté à partir du panneau creux, notamment pour envoyer une proportion plus ou moins importante de l'air collecté vers l'intérieur du bâtiment, et le restant vers l'extérieur du bâtiment. La régulation se fait en fonction de la différence entre la température d'air collecté et d'au moins une température intérieure au bâtiment, de manière à assurer un confort thermique à l'intérieur du bâtiment. Selon un mode de réalisation avantageux, le système de ventilation peut être installé sur un toit à deux versants, par exemple deux versants nord-sud du toit, ou est-ouest du toit, un collecteur d'air peut être dédié au(x) panneau(x) creux de chaque versant, au moins un capteur de température d'air peut équiper chaque versant du toit, et une pompe ou un dispositif de ventilation être dédié à chaque collecteur. La régulation du flux d'air appelé par chaque pompe peut alors être effectuée indépendamment pour chaque versant du toit. Le débit d'air ou la proportion d'air collecté envoyé à l'intérieur du bâtiment peut également être régulé indépendamment pour chaque versant du toit.

Le système de régulation peut également comprendre des capteurs pour mesurer au moins une température extérieure au bâtiment. La prise en compte de la température d'air collecté par l'unité de commande peut être faite de manière à augmenter le débit d'air circulant dans le panneau creux si cette température devient supérieure à un seuil, par exemple si le panneau creux est disposé sous un panneau solaire. On peut ainsi éviter une surchauffe du panneau solaire.

Les panneaux creux du dispositif selon l'invention et le système de ventilation associé permettent d'assurer une isolation thermique du bâtiment tout en récupérant les calories liées à l'ensoleillement de la toiture soit en récupérant uniquement l'air circulant dans le panneau creux lui-même soit en récupérant en outre une partie de l'air circulant entre le panneau creux et un autre élément de couverture. Une même géométrie de profilé extrudé permet de fabriquer des panneaux étanches et des panneaux creux à ventilation améliorée dans lesquels des ouvertures sont découpées après extrusion.

L'invention propose un dispositif comprenant des éléments de couverture autoportants aptes à contribuer à l'étanchéité d'un toit, permettant d'éviter les phénomènes de surchauffe et de condensation sous toiture, permettant de récupérer des calories dans l'air circulant sous le toit, et permettant, dans certaines variantes de réalisation, de supporter des panneaux solaires tout en limitant l'échauffement de ceux-ci.. L'invention propose également un dispositif de ventilation pour un bâtiment comprenant un toit à une ou plusieurs pentes.

Les dispositifs de ventilation selon l'invention offrent un dispositif de couverture permettant également de remplacer certains éléments de charpente tels que des chevrons. Les dispositifs de ventilation selon l'invention intègrent des fonctions de plusieurs éléments de toiture classiques. Les panneaux du dispositif selon l'invention sont isolants thermiquement et électriquement, faciles à poser même par une main d'oeuvre peu qualifiée équipée d'outillage courant et peuvent être fabriqués à la demande en différentes longueurs. Ils sont de faible masse surfacique et ne nécessitent pas de produit de traitement polluant. La fixation des panneaux creux peut être effectuée par des dispositifs connus tels que clous, vis, étriers ou vis autoforeuses. La juxtaposition ou l'emboîtement des panneaux creux est facile et un démontage partiel non destructif est envisageable. Enfin, la conservation de l'épaisseur du toit permet d'installer le dispositif sans nécessiter de permis de construire spécifique.

Au cours de son vieillissement, le panneau creux ne libère pas de produit toxique. Par l'utilisation de matériaux recyclés et de déchets de bois, il peut permettre de substantielles économies d'énergie tout en étant lui-même recyclable dans des filières de recyclage existantes.

Enfin, l'association du panneau creux et du collecteur d'air permet d'intégrer facilement et de manière fiable un dispositif de ventilation à un bâtiment, tout en gardant les propriétés spécifiques à chaque application (étanchéité, valorisation de calories). De plus, il est également possible d'améliorer le refroidissement d'un équipement photovoltaïque par le panneau creux. On peut notamment obtenir une épaisseur d'air déterminée, en choisissant la hauteur du panneau creux. Ainsi, en fonction des besoins de ventilation, on pourra prévoir une épaisseur de lame d'air de 70mm par exemple, afin de maintenir l'équipement photovoltaïque à une température modérée à laquelle il présente un rendement élevé.

## Revendications

1. Dispositif de ventilation pour un bâtiment comprenant un toit à une ou plusieurs pentes, qui comprend :
- au moins un panneau creux (10) définissant une lame d'air, destiné à être monté selon la ligne de plus grande pente d'au moins une des pentes du toit, le panneau creux comprenant au moins deux ouvertures d'extrémité (12, 13) opposées l'une à l'autre mettant en communication la lame d'air avec l'extérieur du panneau (10) et
- un collecteur d'air monté en communication avec la lame d'air du panneau creux (10) et destiné à être en communication avec l'air intérieur du bâtiment,
dans lequel le collecteur d'air comprend un moyen d'ouverture apte à permettre ou à empêcher la circulation d'air entre le collecteur et l'intérieur du bâtiment, **caractérisé en ce que** le moyen d'ouverture étant commandé en fonction de la différence de température entre la température de l'air dans le collecteur d'air et celle de l'air intérieur du bâtiment.

2. Dispositif de ventilation selon la revendication 1 dans lequel le collecteur d'air est configuré pour être monté à proximité du faîte du toit et pour être mis en communication avec la lame d'air du panneau creux (10) par une des deux ouvertures (13).

3. Dispositif de ventilation selon la revendication 1 ou 2 dans lequel le toit comprend une ou plusieurs pannes faitières (25, 32) et dans lequel le panneau creux (26) est destiné à être monté sur au moins une panne faitière (25) du toit, le collecteur d'air entourant au moins partiellement ladite au moins une panne faitière (25).

4. Dispositif de ventilation selon la revendication 1 comprenant deux panneaux creux (26, 33) destinés à être montés sur deux pentes différentes du toit, et un moyen de liaison aéraulique (29) permettant de relier les lames de deux panneaux creux (26, 33) ensemble, dans lequel au moins un panneau creux (33) comprend une paroi supérieure et une paroi inférieure, sensiblement parallèles, définissant l'épaisseur de la lame d'air, et dans lequel le collecteur d'air (35) est monté sur la paroi inférieure du panneau creux (33).

5. Dispositif de ventilation selon la revendication 4 comprenant également un moyen de fermeture (37) monté sur l'ouverture aval d'extrémité du panneau creux (33) sur lequel est monté le collecteur d'air (35).

6. Dispositif de ventilation selon l'une quelconque des revendications précédentes, dans lequel le panneau creux (10) est un panneau monobloc configuré pour permettre de canaliser au moins une première lame d'air circulant longitudinalement entre les deux ouvertures d'extrémité, la première lame d'air étant canalisée dans un volume libre (122, 123, 430) situé entre une paroi supérieure (120, 411) et une paroi inférieure (119, 410) du panneau creux, et pour permettre en outre de canaliser une seconde lame d'air entre la paroi supérieure (120, 411) du panneau creux, entre des zones support (106, 420) du panneau creux formant des reliefs longitudinaux par rapport à la paroi supérieure, et entre un élément de couverture sensiblement plan reposant directement sur les zones support (106,420).

7. Charpente de toit (1, 20) comprenant un dispositif de ventilation selon l'une des revendications précédentes.

8. Charpente (20) comprenant un dispositif de ventilation selon l'une des revendications 1 à 3 comprenant deux pentes (21, 22), et comprenant au moins un panneau creux (26, 33) sur chaque pente.

9. Charpente (20) selon la revendication 8 dans laquelle le dispositif de ventilation comprend au moins deux circuits collecteurs distincts (38, 39), chaque panneau creux (26, 33) étant en communication avec un des deux circuits collecteurs (38, 39), et dans lequel chaque circuit (38, 39) comprend un moyen séparé de régulation de la circulation d'air entre le panneau creux et l'intérieur du bâtiment, de préférence par un thermostat.

10. Charpente (1, 20) selon l'une des revendications 7 à 9 comprenant des liteaux (12, 27) fixés sur le panneau creux (10, 26), et des tuiles (28) disposées sur les liteaux.

11. Charpente (20) selon l'une des revendications 7 à 10 comprenant une couverture et/ou des panneaux solaires (34), par exemple photovoltaïques ou chauffants, fixés sur le panneau creux (33).

## Patentansprüche

1. Belüftungsvorrichtung für ein Gebäude mit einem Dach mit einer oder mehreren Schrägen, umfassend:
- mindestens eine Hohlplatte (10), die einen Zwischenraum aus Luft definiert, die dazu bestimmt ist, gemäß der Linie einer größten Schräge mindestens einer der Schrägen des Dachs angebracht zu sein, wobei die Hohlplatte mindestens zwei einander gegenüberliegende Endöffnungen (12, 13), die den Zwischenraum aus Luft mit dem Äußeren der Platte (10) in Verbindung bringen, umfasst, und
- einen Luftkollektor, der in Verbindung mit dem Zwischenraum aus Luft der Hohlplatte (10) angebracht ist und dazu bestimmt ist, mit der Innenluft des Gebäudes in Verbindung zu stehen,
wobei der Luftkollektor ein Öffnungsmittel umfasst, das in der Lage ist, die Luftzirkulation zwischen dem Kollektor und dem Inneren des Gebäudes zu erlauben oder zu verhindern, **dadurch gekennzeichnet, dass** wobei das Öffnungsmittel in Abhängigkeit von dem Temperaturunterschied zwischen der Temperatur der Luft in dem Luftkollektor und jener der Innenluft des Gebäudes gesteuert wird.

2. Belüftungsvorrichtung nach Anspruch 1, wobei der Luftkollektor ausgelegt ist, in der Nähe des Dachfirsts angebracht zu sein und durch eine der zwei Öffnungen (13) mit dem Zwischenraum aus Luft der Hohlplatte (10) in Verbindung gebracht zu sein.

3. Belüftungsvorrichtung nach Anspruch 1 oder 2, wobei das Dach eine oder mehrere Firstpfetten (25, 32) umfasst und wobei die Hohlplatte (26) dazu bestimmt ist, auf mindestens einer Firstpfette (25) des Dachs angebracht zu sein, wobei der Luftkollektor die mindestens eine Firstpfette (25) zumindest teilweise umgibt.

4. Belüftungsvorrichtung nach Anspruch 1, umfassend zwei Hohlplatten (26, 33), die dazu bestimmt sind, auf zwei unterschiedlichen Schrägen des Dachs angebracht zu sein, und ein lufttechnisches Verbindungsmittel (29), das es erlaubt, die Zwischenräume zweier Hohlplatten (26, 33) miteinander zu verbinden, wobei mindestens eine Hohlplatte (33) eine obere Wand und eine untere Wand umfasst, die im Wesentlichen parallel sind, die die Dicke des Zwischenraums aus Luft definieren, und wobei der Luftkollektor (35) auf der unteren Wand der Hohlplatte (33) angebracht ist.

5. Belüftungsvorrichtung nach Anspruch 4, ebenfalls umfassend ein Schließmittel (37), das auf der nachgelagerten Endöffnung der Hohlplatte (33) angebracht ist, auf welcher der Luftkollektor (35) angebracht ist.

6. Belüftungsvorrichtung nach einem der vorhergehenden Ansprüche, wobei die Hohlplatte (10) eine einstückige Platte ist, die ausgelegt ist, zu erlauben, mindestens einen ersten Zwischenraum aus Luft, die in Längsrichtung zwischen den zwei Endöffnungen zirkuliert, zu kanalisieren, wobei der erste Zwischenraum aus Luft in einem freien Volumen (122, 123, 430) kanalisiert wird, das sich zwischen einer oberen Wand (120, 411) und einer unteren Wand (119, 410) der Hohlplatte befindet, und ferner zu erlauben, einen zweiten Zwischenraum aus Luft zwischen der oberen Wand (120, 411) der Hohlplatte, zwischen Stützbereichen (106, 420) der Hohlplatte, die Reliefs in Längsrichtung bezogen auf die obere Wand bilden, und zwischen einem im Wesentlichen ebenen Abdeckelement, das direkt auf den Stützbereichen (106, 420) ruht, zu kanalisieren.

7. Balkenwerk eines Dachs (1, 20), umfassend eine Belüftungsvorrichtung nach einem der vorhergehenden Ansprüche.

8. Balkenwerk (20), umfassend eine Belüftungsvorrichtung nach einem der Ansprüche 1 bis 3, umfassend zwei Schrägen (21, 22) und umfassend mindestens eine Hohlplatte (26, 33) auf jeder Schräge.

9. Balkenwerk (20) nach Anspruch 8, wobei die Belüftungsvorrichtung mindestens zwei gesonderte Kollektorkreise (38, 39) umfasst, wobei jede Hohlplatte (26, 33) mit einem der zwei Kollektorkreise (38, 39) in Verbindung steht, und wobei jeder Kreis (38, 39) ein separates Mittel zum Regeln der Luftzirkulation zwischen der Hohlplatte und dem Inneren des Gebäudes, vorzugsweise durch ein Thermostat, umfasst.

10. Balkenwerk (1, 20) nach einem der Ansprüche 7 bis 9, umfassend Latten (12, 27), die auf der Hohlplatte (10, 26) befestigt sind, und Dachziegel (28), die auf den Latten angeordnet sind.

11. Balkenwerk (20) nach einem der Ansprüche 7 bis 10, umfassend eine Abdeckung und/oder beispielsweise Photovoltaik- oder Heiz-Solarpaneele (34), die auf der Hohlplatte (33) befestigt sind.

## Claims

1. Ventilation device for a building comprising a roof with one or more slopes, which comprises:
- at least one hollow panel (10) defining an air layer and intended to be mounted along the line of greatest slope of at least one of the slopes of the roof, the hollow panel comprising at least two mutually opposed end openings (12, 13) which bring the air layer into communication with the exterior of the panel (10), and
- an air collector mounted in communication with the air layer of the hollow panel (10) and intended to be in communication with the interior air of the building,
in which the air collector comprises an opening means able to allow or to prevent the circulation of air between the collector and the interior of the building, **characterized in that** the opening means being controlled as a function of the temperature difference between the temperature of the air in the air collector and that of the interior air of the building.

2. Ventilation device according to Claim 1, in which the air collector is configured to be mounted in the vicinity of the ridge of the roof and to be brought into communication with the air layer of the hollow panel (10) through one of the two openings (13).

3. Ventilation device according to Claim 1 or 2, in which the roof comprises one or more ridge boards (25, 32) and in which the hollow panel (26) is intended to be mounted on at least one ridge board (25) of the roof, the air collector at least partially surrounding said at least one ridge board (25).

4. Ventilation device according to Claim 1, comprising two hollow panels (26, 33) intended to be mounted on two different slopes of the roof, and an aeraulic connection means (29) for connecting the air layers of two hollow panels (26, 33) together, in which at least one hollow panel (33) comprises an upper wall and a lower wall which are substantially parallel and define the thickness of the air layer, and in which the air collector (35) is mounted on the lower wall of the hollow panel (33).

5. Ventilation device according to Claim 4, also comprising a closure means (37) mounted on the downstream end opening of the hollow panel (33) on which the air collector (35) is mounted.

6. Ventilation device according to any one of the preceding claims, in which the hollow panel (10) is a monobloc panel configured to make it possible to channel at least one first air layer circulating longitudinally between the two end openings, the first air layer being channelled in a free volume (122, 123, 430) situated between an upper wall (120, 411) and a lower wall (119, 410) of the hollow panel, and additionally to make it possible to channel a second air layer between the upper wall (120, 411) of the hollow panel, between support zones (106, 420) of the hollow panel forming longitudinal reliefs with respect to the upper wall, and between a substantially planar covering element resting directly on the support zones (106, 420).

7. Roof framework (1, 20) comprising a ventilation device according to one of the preceding claims.

8. Framework (20) comprising a ventilation device according to one of Claims 1 to 3, comprising two slopes (21, 22) and comprising at least one hollow panel (26, 33) on each slope.

9. Framework (20) according to Claim 8, in which the ventilation device comprises at least two separate collector circuits (38, 39), each hollow panel (26, 33) being in communication with one of the two collector circuits (38, 39), and in which each circuit (38, 39) comprises a separate means for regulating the circulation of air between the hollow panel and the interior of the building, preferably by means of a thermostat.

10. Framework (1, 20) according to one of Claims 7 to 9, comprising battens (12, 27) fixed to the hollow panel (10, 26), and tiles (28) arranged on the battens.

11. Framework (20) according to one of Claims 7 to 10, comprising a covering and/or solar panels (34), for example photovoltaic or heating solar panels, fixed to the hollow panel (33).
